# EUROPÄISCHE PATENTANMELDUNG

(11) **EP 4 651 439 A1**
(43) Veröffentlichungstag der Anmeldung: **19.11.2025**
(21) Anmeldenummer: 25174782.0
(22) Anmeldetag: 07.05.2025
(51) Int. Cl.: H04L 9/40, H04W 4/80, G06F 21/62

(54) **VERFAHREN UND SYSTEM ZUM ABRUFEN VON SANITÄRGERÄTEDATEN**

(30) Priorität: 16.05.2024 DE 102024204545
(71) Anmelder: BLANCO GmbH + Co KG, 75038 Oberderdingen (DE)
(72) Erfinder: Schuß, Steven, 76327 Pfinztal (DE)
(74) Vertreter: Ullrich & Naumann PartG mbB

(57) **Zusammenfassung**

Die Erfindung betrifft ein Verfahren zum Abrufen von Sanitärgerätedaten durch ein Endgerät, insbesondere ein mobiles Endgerät, wobei die Sanitärgerätedaten pseudonymisiert auf einem Netzwerkgerät, insbesondere in einer Cloud, gespeichert sind, wobei die Sanitärgerätedaten Informationen über ein Sanitärgerät enthalten, umfassend die Schritte:
- Stellen einer ersten Datenanforderung durch das Endgerät;
- Stellen einer zweiten Datenanforderung durch das Sanitärgerät nach Erhalt einer Mitteilung zumindest ein beabsichtigtes Stellen der ersten Datenanforderung durch das Endgerät;
- Vergleichen der ersten und der zweiten Datenanforderung durch das Netzwerkgerät;
- Bereitstellen von Sanitärgerätedaten durch das Netzwerkgerät an das Endgerät basierend auf dem Vergleich der ersten und zweiten Datenanforderung;
- Abrufen der Sanitärgerätedaten durch das Endgerät.

## Beschreibung

Die Erfindung betrifft ein Verfahren zum Abrufen von Sanitärgerätedaten durch ein Endgerät, wobei die Sanitärgerätedaten pseudonymisiert auf einem Netzwerkgerät gespeichert sind, wobei die Sanitärgerätedaten Informationen über ein Sanitärgerät umfassen.

Die Erfindung betrifft weiter ein Endgerät, umfassend eine Kommunikationseinrichtung zur Kommunikation mit einem Netzwerkgerät und/oder einem Sanitärgerät sowie einen Prozessor und einen Speicher mit computerlesbaren Instruktionen.

Die Erfindung betrifft weiter ein Sanitärgerät, umfassend eine Kommunikationseinrichtung zur Kommunikation mit einem Netzwerkgerät und/oder einem Endgerät sowie einen Prozessor und einen Speicher mit computerlesbaren Instruktionen.

Die Erfindung betrifft weiter ein Netzwerkgerät, umfassend eine Kommunikationseinrichtung zur Kommunikation mit einem Sanitärgerät und/oder einem Endgerät sowie einen Prozessor und einen Speicher mit computerlesbaren Instruktionen.

Die Erfindung betrifft weiter ein System aus einem Endgerät, einem Sanitärgerät und einem Netzwerkgerät.

Obwohl die Erfindung allgemein auf beliebige Sanitärgeräte, Endgeräte und Netzwerkgeräte anwendbar ist, wird die vorliegende Erfindung in Bezug auf Küchenspülen, mobile Endgeräte und eine Cloud erläutert.

Moderne Sanitärgeräte wie Küchenspülen oder dergleichen können Sanitärgerätedaten generieren, die über die Verwendung des Sanitärgeräts Auskunft geben können. Beispielsweise können Sanitärgerätedaten die verwendete Warmwassermenge, die verwendete Kaltwassermenge oder den Energieverbrauch wiedergeben. Diese Sanitärgerätedaten können dabei zum einfachen Abruf in der Cloud gespeichert werden und gegebenenfalls auch zur anonymisierten Auswertung durch einen Hersteller herangezogen werden.

Hierfür ist es bekannt geworden, ein Benutzerkonto für einen Nutzer zu erstellen und mittels des Benutzerkontos auf die Sanitärgerätedaten in der Cloud zuzugreifen. An diesem Verfahren ist jedoch nachteilig, dass ein pseudonymisiertes Speichern der Sanitärgerätedaten in der Cloud nicht möglich ist, da die Sanitärgerätedaten immer einem Konto zugeordnet werden müssen. Somit können im Fall eines unbefugten Zugriffs auf die Cloud, sensible Sanitärgerätedaten an Dritte gelangen.

Es ist ebenfalls bekannt geworden, Sanitärgerätedaten pseudonymisiert in der Cloud zu speichern. Hieran hat sich als nachteilig erwiesen, dass nicht ersichtlich ist, wer Zugriff auf die Sanitärgerätedaten erhalten darf, da der Eigentümer des Sanitärgeräts unbekannt ist. Somit ist es möglich, dass ein unbefugter Dritter sich als Eigentümer des Sanitärgeräts ausgibt, um so Zugriff auf die Sanitärgerätedaten zu erhalten.

Eine Aufgabe der vorliegenden Erfindung ist es daher, ein Verfahren zum Abrufen von Sanitärgerätedaten durch ein Endgerät anzugeben, wobei die Sanitärgerätedaten pseudonymisiert auf einem Netzwerkgerät gespeichert sind, wobei die Sanitärgerätedaten Informationen über ein Sanitärgerät umfassen.

Eine weitere Aufgabe der vorliegenden Erfindung ist es, ein entsprechendes Endgerät, ein Sanitärgerät, ein Netzwerkgerät und ein System aus Endgerät, Sanitärgerät und Netzwerkgerät anzugeben.

Weiterhin ist eine Aufgabe der vorliegenden Erfindung, ein alternatives Verfahren zum Abrufen von Sanitärgerätedaten, ein alternatives Endgerät, ein alternatives Sanitärgerät, ein alternatives Netzwerkgerät und ein alternatives System, umfassend ein Endgerät, ein Sanitärgerät und ein Netzwerkgerät, anzugeben.

In einer Ausführungsform löst die vorliegende Erfindung die vorstehend genannten Aufgaben mit einem Verfahren zum Abrufen von Sanitärgerätedaten durch ein Endgerät, insbesondere ein mobiles Endgerät, wobei die Sanitärgerätedaten pseudonymisiert auf einem Netzwerkgerät, insbesondere in einer Cloud, gespeichert sind, wobei die Sanitärgerätedaten Informationen über ein Sanitärgerät umfassen, umfassend die Schritte:
- Stellen einer ersten Datenanforderung durch das Endgerät;
- Stellen einer zweiten Datenanforderung durch das Sanitärgerät nach Erhalt einer Mitteilung über zumindest ein beabsichtigtes Stellen der ersten Datenanforderung durch das Endgerät;
- Vergleichen der ersten und der zweiten Datenanforderung durch das Netzwerkgerät;
- Bereitstellen von Sanitärgerätedaten durch das Netzwerkgerät an das Endgerät basierend auf dem Vergleich der ersten und zweiten Datenanforderung;
- Abrufen der Sanitärgerätedaten durch das Endgerät.

In einer Ausführungsform löst die vorliegende Erfindung die vorstehend genannten Aufgaben mit einem Endgerät, insbesondere einem mobilen Endgerät, umfassend eine Kommunikationseinrichtung zur Kommunikation mit einem Netzwerkgerät, insbesondere einer Cloud, und/oder einem Sanitärgerät sowie einen Prozessor und einen Speicher mit computerlesbaren Instruktionen, die bei Ausführung durch den Prozessor bewirken, dass das Endgerät:
- einen Befehl an das Sanitärgerät sendet, wobei der Befehl eine Endgerätidentifizierungsinformation umfasst,
- eine erste Datenanforderung an das Netzwerkgerät stellt, wobei die erste Datenanforderung auf der Endgerätidentifizierungsinformation basiert, und
- Sanitärgerätedaten von dem Netzwerkgerät empfängt.

In einer Ausführungsform löst die vorliegende Erfindung die vorstehend genannten Aufgaben mit einem Sanitärgerät, umfassend eine Kommunikationseinrichtung zur Kommunikation mit einem Netzwerkgerät, insbesondere einer Cloud, und/oder einem Endgerät, insbesondere einem mobilen Endgerät, sowie einen Prozessor und einen Speicher mit computerlesbaren Instruktionen, die bei Ausführung durch den Prozessor bewirken, dass das Sanitärgerät:
- einen Befehl von dem Endgerät empfängt, wobei der Befehl eine Endgerätidentifizierungsinformation umfasst, und
- eine zweite Datenanforderung an das Netzwerkgerät stellt, wobei die Datenanforderung auf der Endgerätidentifizierungsinformation und einer Sanitärgerätidentifizierungsinformation basiert.

In einer Ausführungsform löst die vorliegende Erfindung die vorstehend genannten Aufgaben mit einem Netzwerkgerät, insbesondere eine Cloud, umfassend eine Kommunikationseinrichtung zur Kommunikation mit einem Sanitärgerät und/oder einem Endgerät, insbesondere einem mobilen Endgerät, sowie einen Prozessor und einen Speicher mit computerlesbaren Instruktionen, die bei Ausführung durch den Prozessor bewirken, dass das Netzwerkgerät:
- eine erste Datenanforderung von dem Endgerät empfängt, wobei die erste Datenanforderung auf einer Endgerätidentifizierungsinformation basiert,
- eine zweite Datenanforderung von dem Sanitärgerät empfängt, wobei die zweite Datenanforderung auf der Endgerätidentifizierungsinformation und einer Sanitärgerätidentifizierungsinformation basiert,
- die erste und die zweite Datenanforderung vergleicht, und
- Sanitärgerätedaten an das Endgerät sendet basierend auf dem Vergleich der ersten und zweiten Datenanforderung.

In einer Ausführungsform löst die vorliegende Erfindung die vorstehend genannten Aufgaben mit einem System aus einem Endgerät gemäß Anspruch 12, einem Sanitärgerät gemäß Anspruch 13 und einem Netzwerkgerät gemäß Anspruch 14.

Einer der damit erzielten Vorteile ist, dass auf zuverlässige und einfache Weise ein unbefugter Zugang zu Sanitärgerätedaten durch einen Dritten verhindert werden kann. Ein weiterer Vorteil ist, dass ein Abruf der Sanitärgerätedaten ohne direkte Nähe zu dem Sanitärgerät verhindert wird, sodass ein Abruf der Sanitärgerätedaten durch einen externen Nutzer verhindert wird.

In einer Ausführungsform des Verfahren kann der Datenabruf durch das Endgerät initiiert werden. Hierzu kann das Endgerät eine Datenanforderung an das Netzwerkgerät senden. Das Sanitärgerät kann eine Mitteilung erhalten, dass das Endgerät die Datenanforderung gesendet hat oder senden wird und selbst eine zweite Datenanforderung senden. Die Mitteilung kann insbesondere von dem Endgerät gesendet werden. Das Netzwerkgerät kann beide Datenanforderungen erhalten und kann aus dem Vergleich der beiden Datenanforderungen ermitteln, dass das Endgerät die Sanitärgerätedaten erhalten darf. Anschließend kann es die Sanitärgerätedaten dem Endgerät zur Verfügung stellen, sodass das Endgerät die Sanitärgerätedaten abrufen kann.

Weitere Merkmale, Vorteile und weitere Ausführungsformen der Erfindung sind im Folgenden beschrieben oder werden dadurch offenbar.

Gemäß einer vorteilhaften Weiterbildung der Erfindung umfasst die erste Datenanforderung eine Endgerätidentifizierungsinformation. Die Endgerätidentifizierungsinformation kann beispielsweise eine ID des Endgeräts sein. Mittels der Endgerätidentifizierungsinformation kann ein Endgerät eindeutig identifiziert werden. Ein Vorteil hiervon ist, dass ein bereits für den Erhalt von Sanitärgerätedaten authentifiziertes Endgerät auf einfache Weise erkannt werden kann. Hierdurch können dem Endgerät Sanitärgerätedaten direkt bereitgestellt werden, ohne dass eine erneute Authentifizierung des Endgeräts nötig ist.

Gemäß einer weiteren vorteilhaften Weiterbildung der Erfindung wird die Endgerätidentifizierungsinformation basierend auf einem Hash, einer Systemzeit und einem ersten Zufallswert erzeugt. Beispielsweise kann die Endgerätidentifizierungsinformation ein Hash der Systemzeit und des Zufallswerts sein. Ein Vorteil hiervon ist, dass verhindert wird, dass mehrere Endgeräte dieselbe Endgerätidentifizierungsinformation erhalten. Ein weiterer Vorteil hiervon ist, dass es einem unbefugten Dritten erschwert wird, eine Endgerätidentifizierungsinformation per Zufall zu ermitteln.

Gemäß einer weiteren vorteilhaften Weiterbildung der Erfindung umfasst die zweite Datenanforderung eine Sanitärgerätidentifizierungsinformation. Ein Vorteil hiervon ist, dass anhand der Sanitärgerätidentifizierungsinformation ein Sanitärgerät eindeutig identifiziert werden kann.

Gemäß einer weiteren vorteilhaften Weiterbildung der Erfindung wird die Sanitärgerätidentifizierungsinformation basierend auf einem Hash, einer Seriennummer des Sanitärgeräts und einem zweiten Zufallswert erzeugt. Ein Vorteil hiervon ist, dass verhindert wird, dass mehrere Sanitärgeräte dieselbe Sanitärgerätidentifizierungsinformation erhalten, da eine Seriennummer einzigartig ist. Ein weiterer Vorteil ist, dass es einem unbefugten Dritten erschwert wird, eine Endgerätidentifizierungsinformation per Zufall zu ermitteln.

Gemäß einer weiteren vorteilhaften Weiterbildung der Erfindung wird die zweite Datenanforderung basierend auf der Endgerätidentifizierungsinformation erzeugt. Die zweite Datenanforderung kann basierend auf der Endgerätidentifizierungsinformation erzeugt werden, wenn das Sanitärgerät die Endgerätidentifizierungsinformation kennt. Somit kann das Sanitärgerät bereits mit dem gewünschten Endgerät verbunden sein. Ein Vorteil hiervon ist, dass verhindert wird, dass einem unerwünschter Nutzer Sanitärgerätedaten bereitgestellt werden, da die zweite Datenanforderung nicht das Endgerät des unerwünschten Nutzers referenziert.

Gemäß einer weiteren vorteilhaften Weiterbildung der Erfindung umfasst das Vergleichen der ersten und zweiten Datenanforderung eine Abfrage, ob die Endgerätidentifizierungsinformation zu der Sanitärgerätidentifizierungsinformation korrespondiert. Die Sanitärgerätidentifizierungsinformation kann beispielsweise die Endgerätidentifizierungsinformation umfassen. Somit kann das Netzwerkgerät überprüfen, ob die in der Sanitärgerätidentifizierungsinformation enthaltene Endgerätidentifizierungsinformation tatsächlich der Endgerätidentifizierungsinformation aus der ersten Datenanforderung entspricht. Nur wenn die Endgerätidentifizierungsinformation und die Sanitärgerätidentifizierungsinformation zueinander korrespondieren, werden die Sanitärgerätedaten dem Endgerät bereitgestellt. Auf diese Weise kann sichergestellt werden, dass lediglich das Endgerät des gewünschten Nutzers die Sanitärgerätedaten erhält und nicht ein Endgerät eines unbefugten Nutzers.

Gemäß einer weiteren vorteilhaften Weiterbildung der Erfindung umfasst das Vergleichen der ersten und zweiten Datenanforderung einen Vergleich von Zeitpunkten, an dem die erste und die zweite Datenanforderung gestellt worden sind und ob die Differenz der beiden Zeitpunkte geringer als ein Schwellwert ist. Insbesondere kann überprüft werden, ob die beiden Datenanforderungen innerhalb eines definierten Zeitintervalls gestellt werden. Beispielsweise kann überprüft werden, ob die Datenanforderungen innerhalb eines Zeitraums von weniger als 5 Minuten, von weniger als 3 Minuten, von weniger als 1 Minute oder von weniger als 10 Sekunden erfolgt sind. Ein Vorteil hiervon ist, dass die Wahrscheinlichkeit verringert wird, dass ein unbefugter Nutzer Zugang zu den Sanitärgerätedaten erhält.

Gemäß einer weiteren vorteilhaften Weiterbildung der Erfindung wird die zweite Datenanforderung lediglich dann gestellt, wenn ein Nutzer ein Betätigungselement am Sanitärgerät betätigt. Beispielsweise könnte ein Nutzer die erste Datenanforderung durch das Endgerät senden und anschließend ein Betätigungselement auf dem Sanitärgerät betätigen, sodass das Sanitärgerät die zweite Datenanforderung sendet.

Ein Vorteil hiervon ist, dass sichergestellt werden kann, dass der Datenabruf durch einen befugten Nutzer erfolgt ist.

Gemäß einer weiteren vorteilhaften Weiterbildung der Erfindung wird die zweite Datenanforderung lediglich dann gestellt, wenn das Endgerät einen Befehl über eine drahtlose Kommunikationseinrichtung, insbesondere über Bluetooth, an das Sanitärgerät sendet. Beispielsweise kann das Endgerät mittels Bluetooth mit dem Sanitärgerät verbunden sein und mittels der Bluetooth-Verbindung eine Mitteilung an das Sanitärgerät senden. Die Mitteilung kann einen Befehl zum Stellen der zweiten Datenanforderung und/oder die Endgerätidentifizierungsinformation umfassen. Somit muss sich Endgerät in physischer Nähe zu dem Sanitärgerät befinden, um eine Datenanforderung auszulösen. Ein Vorteil hiervon ist, dass verhindert werden kann, dass unbefugte Nutzer ohne physische Nähe zum Sanitärgerät Zugriff auf die Sanitärgerätedaten erhalten.

Gemäß einer weiteren vorteilhaften Weiterbildung der Erfindung benötigt die drahtlose Kommunikationseinrichtung zur Kommunikation mit dem Sanitärgerät eine Verbindungsinformation, wobei die Verbindungsinformation auf dem Sanitärgerät physisch bereitgestellt ist. Beispielsweise kann die Verbindungsinformation ein Passwort sein, das auf dem Sanitärgerät aufgedruckt ist. Nur wenn dem Endgerät durch einen Nutzer die Verbindungsinformation bereitgestellt wird, kann es mit dem Sanitärgerät kommunizieren. Somit muss ein Nutzer sich in physischer Nähe zum Sanitärgerät befinden, um die Verbindungsinformation zu erhalten. Ein Vorteil hiervon ist, dass verhindert werden kann, dass unbefugte Nutzer ohne physische Nähe zum Sanitärgerät Zugriff auf die Sanitärgerätedaten erhalten.

Gemäß einer weiteren vorteilhaften Weiterbildung der Erfindung wird die zweite Datenanforderung lediglich dann gestellt, wenn eine Signalstärke des Befehls der drahtlosen Kommunikationseinrichtung größer als ein Schwellwert ist, wenn der Befehl von dem Sanitärgerät empfangen wird. Mit anderen Worten wird das Sanitärgerät lediglich dann die zweite Datenanforderung stellen, wenn eine Signalstärke der Kommunikation zwischen Sanitärgerät und Endgerät ausreichend hoch ist. Auf diese Weise kann die zweite Datenanforderung lediglich dann gestellt werden, wenn sich das Endgerät in physischer Nähe zu dem Sanitärgerät befindet. Ein Vorteil hiervon ist, dass verhindert werden kann, dass ein unbefugter Nutzer in einer größeren Umgebung des Sanitärgeräts Zugang zu den Sanitärgerätedaten erhalten kann.

Gemäß einer weiteren vorteilhaften Weiterbildung der Erfindung speichert das Netzwerkgerät die Sanitärgerätidentifizierungsinformation und/oder die Endgerätidentifizierungsinformation. Sobald dem Endgerät Sanitärgerätedaten bereitgestellt werden, kann das Endgerät als befugtes Endgerät eingestuft werden. Somit kann dem Endgerät bei späteren Datenanforderungen direkt Sanitärgerätedaten bereitgestellt werden. Hierfür können die Sanitärgerätidentifizierungsinformation und/oder die Endgerätidentifizierungsinformation auf dem Netzwerkgerät gespeichert werden, sodass das Endgerät identifiziert werden kann. Ein Vorteil hiervon ist, dass spätere Datenanforderungen durch das Endgerät vereinfacht werden.

Weitere wichtige Merkmale und Vorteile der Erfindung ergeben sich aus den Unteransprüchen, aus den Zeichnungen und aus der dazugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der vorliegenden Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

Dabei zeigt in schematischer Form
- Fig. 1: Schritte eines Verfahrens gemäß einer Ausführungsform der vorliegenden Erfindung;
- Fig. 2: ein Endgerät gemäß einer Ausführungsform der vorliegenden Erfindung;
- Fig. 3: ein Sanitärgerät gemäß einer Ausführungsform der vorliegenden Erfindung;
- Fig. 4: ein Netzwerkgerät gemäß einer Ausführungsform der vorliegenden Erfindung; und
- Fig. 5: ein System gemäß einer Ausführungsform der vorliegenden Erfindung.

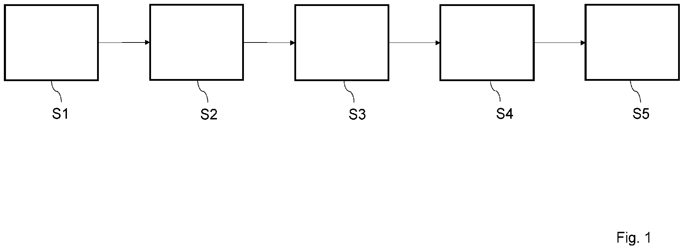

Figur 1 zeigt in schematischer Form Schritte eines Verfahrens gemäß einer Ausführungsform der vorliegenden Erfindung.

Figur 1 zeigt Schritte eines Verfahrens zum Abrufen Sanitärgerätedaten durch ein Endgerät. Das Endgerät kann insbesondere ein mobiles Endgerät wie ein Smartphone, ein Tablet oder ein Laptop sein. Die Sanitärgerätedaten umfassen Informationen über ein Sanitärgerät, beispielsweise die Menge an verbrauchtem Wasser, durchschnittlicher Temperatur des Wassers, Energieverbrauch, Wartungszyklen und/oder Füllmenge von CO₂-Kartuschen. Die Sanitärgerätedaten sind auf einem Netzwerkgerät gespeichert, wobei es sich bei dem Netzwerkgerät beispielsweise um einen lokalen Server oder eine Cloud handeln kann. Insbesondere sind die Sanitärgerätedaten pseudonymisiert auf dem Netzwerkgerät gespeichert, sodass ein unbefugter Dritter die Sanitärgerätedaten nicht einem spezifischen Sanitärgerät zuordnen kann.

In einem Schritt S1 wird eine erste Datenanforderung durch das Endgerät gestellt. Die Datenanforderung kann beispielsweise eine Endgerätidentifizierungsinformation, insbesondere eine ID des Endgeräts, umfassen. Die ID wird aus einem Hash einer Zufallszahl und einer Systemzeit gebildet, um eine eindeutige, jedoch nicht durch einen unbefugten Nutzer per Zufall ermittelbare ID zu generieren. Die erste Datenanforderung wird an die Cloud gesendet. Zu diesem Zeitpunkt wird die Cloud jedoch die Sanitärgerätedaten noch nicht bereitstellen, da das Endgerät noch nicht authentifiziert ist.

In einem zweiten Schritt S2 wird eine zweite Datenanforderung durch das Sanitärgerät nach Erhalt einer Mitteilung über zumindest ein beabsichtigtes Stellen der ersten Datenanforderung durch das Endgerät gestellt. Die Mitteilung umfasst eine Absicht, dass das Endgerät eine Datenanforderung stellen wird oder bereits gestellt hat. Nachdem das Endgerät die erste Datenanforderung gestellt hat, übermittelt das Endgerät dem Sanitärgerät seine eigene ID. Nach dieser Mitteilung stellt das Sanitärgerät die zweite Datenanforderung an die Cloud. Es ist ebenfalls denkbar, dass das Endgerät zuerst seine ID zusammen mit der Mitteilung an das Sanitärgerät übermittelt, das Sanitärgerät die zweite Datenanforderung stellt und anschließend das Endgerät die erste Datenanforderung stellt. Weiterhin ist es denkbar, dass das Endgerät seine ID zusammen mit der Mitteilung an das Sanitärgerät übermittelt und anschließend das Sanitärgerät und das Endgerät gleichzeitig die Datenanforderungen stellen. Die zweite Datenanforderung kann beispielsweise eine Sanitärgerätidentifizierungsinformation umfassen, die ein Hash aus einer Seriennummer des Sanitärgeräts und einer Zufallszahl umfassen kann. Insbesondere kann die zweite Datenanforderung die ID des Endgeräts umfassen.

Es ist denkbar, dass das Sanitärgerät eine Bestätigung an das Endgerät sendet, wenn es die Mitteilung über eine Beabsichtigung des Stellens der ersten Datenanforderung erhält. Insbesondere können auf diese Weise beide Geräte einen Zeitpunkt definieren, an dem sie die Datenanforderungen stellen werden.

Durch die Zufallszahl wird die Wahrscheinlichkeit verringert, dass ein unbefugter Nutzer eine ID des Endgeräts oder eine Sanitärgerätidentifizierungsinformation per Zufall erraten kann.

Die Mitteilung an das Sanitärgerät kann beispielsweise via Bluetooth von dem Endgerät gesendet werden. Hierdurch wird gewährleistet, dass das Endgerät sich bereits vor dem Datenabruf mit dem Sanitärgerät verbunden hat und das Endgerät sich in physischer Nähe zum Sanitärgerät befindet.

In einem dritten Schritt S3 wird die erste und die zweite Datenanforderung durch das Netzwerkgerät verglichen. Beispielsweise wird überprüft, ob die zweite Datenanforderung die ID des Endgeräts umfasst und dieselbe ID des Endgeräts in der ersten Datenanforderung enthalten ist. Insbesondere wird überprüft, ob die erste und die zweite Datenanforderung beide innerhalb eines bestimmten Zeitraums gestellt worden sind. Wenn die zweite Datenanforderung zu der ersten Datenanforderung korrespondiert und beide Datenanforderung im Wesentlichen gleichzeitig gestellt worden sind, wird das Endgerät zum Empfang der Sanitärgerätedaten autorisiert. Es ist denkbar, dass die Schritte S1, S2 und S3 mindestens zweimal oder mindestens dreimal wiederholt werden, um mit höherer Wahrscheinlichkeit auszuschließen, dass ein unbefugter Nutzer Zugang zu den Sanitärgerätedaten erhält.

In einem vierten Schritt S4 werden Sanitärgerätedaten dem Endgerät durch die Cloud bereitgestellt, basierend auf dem Vergleich der ersten und der zweiten Datenanforderung. Wenn das Endgerät durch den Vergleich der Datenanforderung zum Empfang der Sanitärgerätedaten autorisiert worden ist, werden die Sanitärgerätedaten dem Endgerät bereitgestellt. Die Sanitärgerätedaten können pseudonymisiert in der Cloud gespeichert seid und lediglich durch die Seriennummer des Sanitärgeräts oder der Sanitärgeräteidentifizierungsinformation referenziert sein. Da bei dem zweiten Datenabruf die Sanitärgeräteidentifizierungsinformation, die die Seriennummer umfassen kann, übermittelt wird, können so die entsprechenden Sanitärgerätedaten bereitgestellt werden.

In einem fünften Schritt S5 werden die Sanitärgerätedaten von dem Endgerät empfangen. Es ist denkbar, dass die ID des Endgeräts und die Sanitärgeräteidentifizierungsinformation in der Cloud gespeichert werden. Wenn das Endgerät eine weitere Datenanforderung stellt, kann die ID des Endgeräts mit der gespeicherten ID des Endgeräts verglichen werden. Wenn die die beiden IDs übereinstimmen, können weitere Sanitärgerätedaten direkt dem Endgerät bereitgestellt werden.

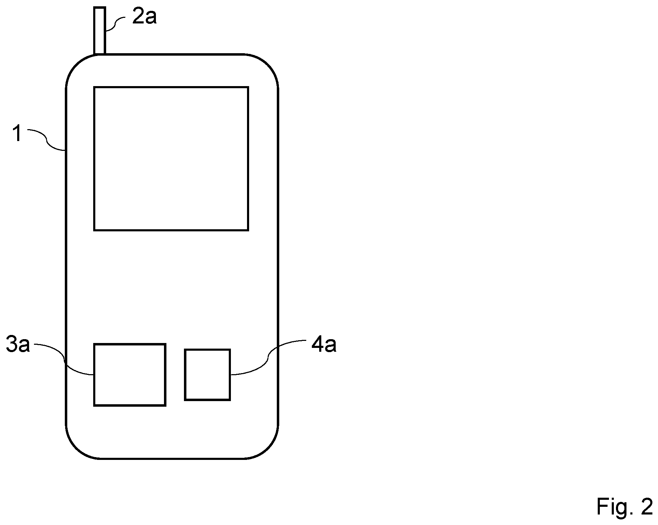

Figur 2 zeigt in schematischer Form ein Endgerät gemäß einer Ausführungsform der vorliegenden Erfindung.

Das Endgerät 1 hier in Form eines mobilen Endgeräts 1 umfasst eine Kommunikationseinrichtung 2a zur Kommunikation mit einem Netzwerkgerät (nicht gezeigt), insbesondere einer Cloud, und/oder einem Sanitärgerät (nicht gezeigt) sowie einen Prozessor 3a und einen Speicher 4a mit computerlesbaren Instruktionen, die bei Ausführung durch den Prozessor 3a bewirken, dass das Endgerät 1:
- einen Befehl an das Sanitärgerät sendet, wobei der Befehl eine Endgerätidentifizierungsinformation umfasst,
- eine erste Datenanforderung an das Netzwerkgerät stellt, wobei die erste Datenanforderung auf der Endgerätidentifizierungsinformation und einem Zufallswert basiert, und
- Sanitärgerätedaten von dem Netzwerkgerät empfängt.

Insbesondere ist das Endgerät 1 dazu ausgebildet, die Schritte S1 und S5 von Figur 1 durchzuführen. Es ist denkbar, dass das Endgerät 1 einen Befehl zum Löschen der Endgerätidentifizierungsinformation und/oder der Sanitärgerätidentifizierungsinformation an das Netzwerkgerät sendet.

In dem Speicher 4a kann ein Programm, insbesondere eine App, gespeichert sein, das eine grafische Darstellung der Sanitärgerätedaten ermöglicht, sowie ein Initiieren des Datenabrufs ermöglicht.

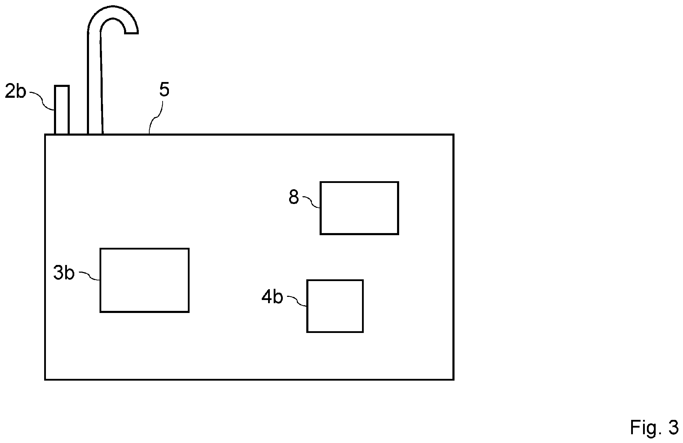

Figur 3 zeigt in schematischer Form ein Sanitärgerät gemäß einer Ausführungsform der vorliegenden Erfindung.

Figur 3 zeigt ein Sanitärgerät 5 umfassend eine Kommunikationseinrichtung 2b zur Kommunikation mit einem Netzwerkgerät (nicht gezeigt), insbesondere einer Cloud, und/oder einem Endgerät (nicht gezeigt), insbesondere einem mobilen Endgerät, sowie einen Prozessor 3b und einen Speicher 4b mit computerlesbaren Instruktionen, die bei Ausführung durch den Prozessor 3b bewirken, dass das Sanitärgerät 5:
- einen Befehl von dem Endgerät empfängt, wobei der Befehl eine Endgerätidentifizierungsinformation umfasst; und
- eine zweite Datenanforderung an das Netzwerkgerät stellt, wobei die Datenanforderung auf der Endgerätidentifizierungsinformation und einer Sanitärgerätidentifizierungsinformation basiert.

Das Sanitärgerät 5 kann insbesondere den Schritt S2 gemäß Figur 1 durchführen. Das Sanitärgerät 5 kann die zweite Datenanforderung lediglich dann an das Netzwerkgerät stellen, wenn der Befehl von dem Endgerät 1 spezifiziert, dass das Sanitärgerät 5 diese Datenanforderung stellen soll.

Auf dem Sanitärgerät 5 ist eine Verbindungsinformation 8, hier in Form eines aufgedruckten Passworts, bereitgestellt. Mittels des Passworts 8 kann ein Nutzer ein Endgerät 1 mit dem Sanitärgerät 5 verbinden, sodass das Sanitärgerät 5 und das Endgerät 1 miteinander kommunizieren können. Insbesondere kann es sich um eine Bluetooth-Verbindung handeln. Es ist denkbar, dass ein Befehl zum Senden der zweiten Datenanforderung lediglich über diese Verbindung, insbesondere diese Bluetooth Verbindung, gesendet werden kann. Somit wird die Wahrscheinlichkeit verringert, dass ein unbefugter Nutzer den Befehl zum Stellen der zweiten Datenanforderung geben kann, da die Verbindungsinformation 8 lediglich sichtbar ist, wenn ein Nutzer sich vor dem Sanitärgerät 5 befindet. Selbst wenn die Verbindungsinformation 8 einem unbefugten Nutzer zugänglich gemacht wird, kann dieser nicht von einem von dem Sanitärgerät entfernten Ort den Befehl für die zweite Datenanforderung stellen, da die Verbindung über Bluetooth lediglich über kurze Entfernungen möglich ist.

Das Sanitärgerät 5 kann dazu ausgebildet sein, den Befehl zum Stellen der zweiten Datenanforderung lediglich dann zu stellen, wenn eine Signal-Stärke der Bluetooth Verbindung größer als ein Grenzwert ist. Somit kann lediglich ein Nutzer in unmittelbarer Nähe zum Sanitärgerät 5 den Befehl zum Stellen der zweiten Datenanforderung geben.

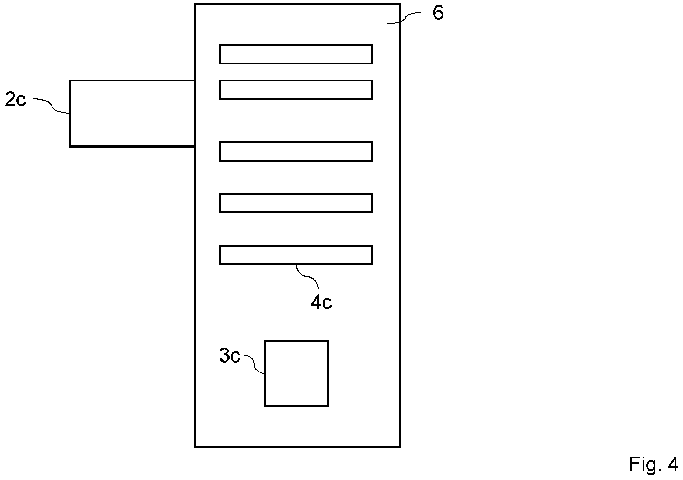

Figur 4 zeigt in schematischer Form ein Netzwerkgerät gemäß einer Ausführungsform der vorliegenden Erfindung.

Figur 4 zeigt ein Netzwerkgerät 6, hier in Form einer Cloud, umfassend eine Kommunikationseinrichtung 2c zur Kommunikation mit einem Sanitärgerät (nicht gezeigt) und/oder einem Endgerät (nicht gezeigt), insbesondere einem mobilen Endgerät, sowie einen Prozessor 3c und einen Speicher 4c mit computerlesbaren Instruktionen, die bei Ausführung durch den Prozessor bewirken, dass das Netzwerkgerät 6:
- eine erste Datenanforderung von dem Endgerät 1 empfängt, wobei die erste Datenanforderung auf einer Endgerätidentifizierungsinformation basiert,
- eine zweite Datenanforderung von dem Sanitärgerät 5 empfängt, wobei die zweite Datenanforderung auf der Endgerätidentifizierungsinformation und einer Sanitärgerätidentifizierungsinformation basiert,
- die erste und die zweite Datenanforderung vergleicht, und
- Sanitärgerätedaten an das Endgerät 1 sendet, basierend auf dem Vergleich der ersten und zweiten Datenanforderung.

Das Netzwerkgerät 6 ist insbesondere dazu ausgebildet, die Schritte S3 und S4 gemäß Figur 1 durchzuführen.

Das Netzwerkgerät 6 kann die Sanitärgerätedaten pseudonymisiert speichern und lediglich als Referenz die Seriennummer und/oder die Sanitärgerätidentifizierungsinformation nutzen. Somit können die Sanitärgerätedaten nicht einem bestimmten Nutzer zugeordnet werden. Es ist möglich, dass das Netzwerkgerät 6 regelmäßig aktuelle Sanitärgerätedaten von dem Sanitärgerät 5 abfragt und/oder vom Sanitärgerät 5 aktuelle Sanitärgerätedaten bereitgestellt bekommt und diese speichert.

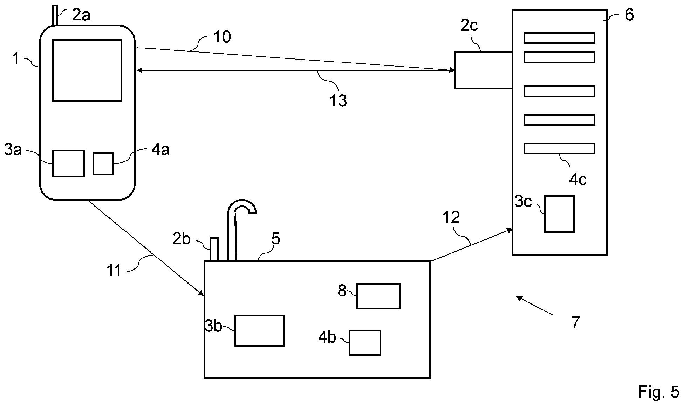

Figur 5 zeigt in schematischer Form ein System gemäß einer Ausführungsform der vorliegenden Erfindung.

In Figur 5 ist ein System 7 umfassend ein Endgerät 2, ein Sanitärgerät 5 und einem Netzwerkgerät 6 gezeigt. Das Endgerät 2 ist insbesondere gemäß dem Endgerät 2 gemäß Figur 2 ausgebildet; das Sanitärgerät 5 ist insbesondere gemäß dem Sanitärgerät 5 gemäß Figur 3 ausgebildet und das Netzwerkgerät 6 ist insbesondere gemäß dem Netzwerkgerät 6 gemäß Figur 4 ausgebildet.

Das System 7 ist insbesondere dazu ausgebildet, die Schritte S1 bis S5 gemäß Figur 1 durchzuführen.

Das Endgerät 1 kann eine erste Datenanforderung 10, umfassend eine Endgerätidentifizierungsinformation an das Netzwerkgerät 6 senden. Weiterhin kann das Endgerät 1 eine Mitteilung 11, hier in Form eines Befehls 11, an das Sanitärgerät 5 senden, dass dieses eine zweite Datenanforderung 12 an das Netzwerkgerät 6 senden soll. Der Befehl 11 an kann die Endgerätidentifizierungsinformation umfassen. Das Sanitärgerät 5 kann die zweite Datenanforderung 12 an das Netzwerkgerät 6 senden, wobei die zweite Datenanforderung die Endgerätidentifizierungsinformation und die Sanitärgerätidentifizierungsinformation umfassen kann. Anschließend kann das Netzwerkgerät 6 die erste Datenanforderung 10 und die zweite Datenanforderung 12 vergleichen und abhängig von dem Vergleich Sanitärgerätedaten 13 an das Endgerät 1 senden.

Zusammenfassend kann zumindest eine Ausführungsform der vorliegenden Erfindung zumindest eines der folgenden Merkmale aufweisen und/oder zumindest einen der folgenden Vorteile bereitstellen:
- Bereitstellen von Sanitärgerätedaten lediglich an befugte Nutzer.
- Schutz vor Zugriff auf Sanitärgerätedaten durch externe Nutzer.
- Endgerät als zusätzliches Authenfizierungsmedium.

Obwohl die vorliegende Erfindung anhand bevorzugter Ausführungsbeispiele beschrieben wurde, ist sie nicht darauf beschränkt, sondern auf vielfältige Weise modifizierbar.

### Bezugszeichenliste

- 1: Endgerät
- 2a: Kommunikationseinrichtung Endgerät
- 2b: Kommunikationseinrichtung Sanitärgerät
- 2c: Kommunikationseinrichtung Netzwerkgerät
- 3a: Prozessor Endgerät
- 3b: Prozessor Sanitärgerät
- 3c: Prozessor Netzwerkgerät
- 4a: Speicher Endgerät
- 4b: Speicher Sanitärgerät
- 4c: Speicher Netzwerkgerät
- 5: Sanitärgerät
- 6: Netzwerkgerät
- 7: System
- 8: Verbindungsinformation

- 10: Erste Datenanforderung
- 11: Mitteilung
- 12: Zweite Datenanforderung
- 13: Sanitärgerätedaten

- S1-S5: Schritte eines Verfahrens

## Patentansprüche

1. Verfahren zum Abrufen von Sanitärgerätedaten (13) durch ein Endgerät (1), insbesondere ein mobiles Endgerät, wobei die Sanitärgerätedaten (13) pseudonymisiert auf einem Netzwerkgerät (6), insbesondere in einer Cloud, gespeichert sind, wobei die Sanitärgerätedaten (13) Informationen über ein Sanitärgerät (5) enthalten, umfassend die Schritte:
- Stellen (S1) einer ersten Datenanforderung (10) durch das Endgerät (1);
- Stellen (S2) einer zweiten Datenanforderung (12) durch das Sanitärgerät (5) nach Erhalt einer Mitteilung (11) über zumindest ein beabsichtigtes Stellen der ersten Datenanforderung (10) durch das Endgerät (1);
- Vergleichen (S3) der ersten (10) und der zweiten Datenanforderung (12) durch das Netzwerkgerät (6);
- Bereitstellen (S4) von Sanitärgerätedaten (13) durch das Netzwerkgerät (6) an das Endgerät (1) basierend auf dem Vergleich der ersten (10) und zweiten Datenanforderung (12);
- Abrufen (S5) der Sanitärgerätedaten (13) durch das Endgerät (1).

2. Verfahren gemäß Anspruch 1, **dadurch gekennzeichnet, dass** die erste Datenanforderung (10) eine Endgerätidentifizierungsinformation umfasst.

3. Verfahren gemäß Anspruch 2, **dadurch gekennzeichnet, dass** die Endgerätidentifizierungsinformation basierend auf einem Hash, einer Systemzeit und einem ersten Zufallswert erzeugt wird.

4. Verfahren gemäß einem der Ansprüche 2 bis 3, **dadurch gekennzeichnet, dass** die zweite Datenanforderung (12) eine Sanitärgerätidentifizierungsinformation umfasst, vorzugsweise wobei die Sanitärgerätidentifizierungsinformation basierend auf einem Hash, einer Seriennummer des Sanitärgeräts (5) und einem zweiten Zufallswert erzeugt wird.

5. Verfahren gemäß Anspruch 4, **dadurch gekennzeichnet, dass** die zweite Datenanforderung (12) basierend auf der Endgerätidentifizierungsinformation erzeugt wird.

6. Verfahren gemäß einem der Ansprüche 4 bis 5, **dadurch gekennzeichnet, dass** das Vergleichen (S3) der ersten (10) und zweiten Datenanforderung (12) eine Abfrage umfasst, ob die Endgerätidentifizierungsinformation zu der Sanitärgerätidentifizierungsinformation korrespondiert.

7. Verfahren gemäß einem der Ansprüche 1 bis 6, **dadurch gekennzeichnet, dass** das Vergleichen (S3) der ersten (10) und zweiten Datenanforderung (12) einen Vergleich von Zeitpunkten umfasst, an dem die erste (10) und die zweite Datenanforderung (12) gestellt worden sind und ob die Differenz der beiden Zeitpunkte geringer als ein Schwellwert ist.

8. Verfahren gemäß einem der Ansprüche 1 bis 7, **dadurch gekennzeichnet, dass** die zweite Datenanforderung (12) lediglich dann gestellt wird, wenn ein Nutzer ein Betätigungselement am Sanitärgerät (5) betätigt.

9. Verfahren gemäß einem der Ansprüche 1 bis 8, **dadurch gekennzeichnet, dass** die zweite Datenanforderung (12) lediglich dann gestellt wird, wenn das Endgerät (1) einen Befehl über eine drahtlose Kommunikationseinrichtung (2a, 2b, 2c), insbesondere über Bluetooth, an das Sanitärgerät (5) sendet, vorzugsweise wobei die drahtlose Kommunikationseinrichtung (2a, 2b, 2c) zur Kommunikation mit dem Sanitärgerät (5) eine Verbindungsinformation (8) benötigt, wobei die Verbindungsinformation (8) auf dem Sanitärgerät (5) physisch bereitgestellt ist.

10. Verfahren gemäß Anspruch 9, **dadurch gekennzeichnet, dass** die zweite Datenanforderung (12) lediglich dann gestellt wird, wenn eine Signalstärke des Befehls (11) der drahtlosen Kommunikationseinrichtung (2a, 2b, 2c) größer als ein Schwellwert ist, wenn der Befehl (11) von dem Sanitärgerät (5) empfangen wird.

11. Verfahren gemäß einem der Anspruch 2 bis 10, **dadurch gekennzeichnet, dass** das Netzwerkgerät (6) die Sanitärgerätidentifizierungsinformation und/oder die Endgerätidentifizierungsinformation speichert.

12. Endgerät (1), insbesondere ein mobiles Endgerät, umfassend eine Kommunikationseinrichtung (2a) zur Kommunikation mit einem Netzwerkgerät (6), insbesondere einer Cloud, und/oder einem Sanitärgerät (5) sowie einen Prozessor (3a) und einen Speicher (4a) mit computerlesbaren Instruktionen, die bei Ausführung durch den Prozessor (3a) bewirken, dass das Endgerät (1):
- einen Befehl (11) an das Sanitärgerät (5) sendet, wobei der Befehl eine Endgerätidentifizierungsinformation umfasst,
- eine erste Datenanforderung (10) an das Netzwerkgerät (6) stellt, wobei die erste Datenanforderung (10) auf der Endgerätidentifizierungsinformation basiert, und
- Sanitärgerätedaten (13) von dem Netzwerkgerät (6) empfängt.

13. Sanitärgerät (5) umfassend eine Kommunikationseinrichtung (2b) zur Kommunikation mit einem Netzwerkgerät (6), insbesondere einer Cloud, und/oder einem Endgerät (1), insbesondere einem mobilen Endgerät, sowie einen Prozessor (3b) und einen Speicher (4b) mit computerlesbaren Instruktionen, die bei Ausführung durch den Prozessor (3b) bewirken, dass das Sanitärgerät (5):
- einen Befehl (11) von dem Endgerät (1) empfängt, wobei der Befehl (11) eine Endgerätidentifizierungsinformation umfasst, und
- eine zweite Datenanforderung (12) an das Netzwerkgerät (6) stellt, wobei die Datenanforderung (12) auf der Endgerätidentifizierungsinformation und einer Sanitärgerätidentifizierungsinformation basiert.

14. Netzwerkgerät (6), insbesondere eine Cloud, umfassend eine Kommunikationseinrichtung (2c) zur Kommunikation mit einem Sanitärgerät (5) und/oder einem Endgerät (1), insbesondere einem mobilen Endgerät, sowie einen Prozessor (3c) und einen Speicher (4c) mit computerlesbaren Instruktionen, die bei Ausführung durch den Prozessor (3c) bewirken, dass das Netzwerkgerät (6):
- eine erste Datenanforderung (10) von dem Endgerät (1) empfängt, wobei die erste Datenanforderung auf einer Endgerätidentifizierungsinformation basiert,
- eine zweite Datenanforderung (12) von dem Sanitärgerät (5) empfängt, wobei die zweite Datenanforderung (12) auf der Endgerätidentifizierungsinformation und einer Sanitärgerätidentifizierungsinformation basiert,
- die erste (10) und die zweite Datenanforderung (12) vergleicht, und
- Sanitärgerätedaten (13) an das Endgerät (1) sendet, basierend auf dem Vergleich der ersten (10) und zweiten Datenanforderung (12).

15. System aus einem Endgerät (1) gemäß Anspruch 12, einem Sanitärgerät (5) gemäß Anspruch 13 und einem Netzwerkgerät (6) gemäß Anspruch 14.
